# EUROPEAN PATENT APPLICATION

(11) **EP 4 095 189 A1**
(43) Date of publication of application: **30.11.2022**
(21) Application number: 21744145.0
(22) Date of filing: 20.01.2021
(51) Int. Cl.: C08K 5/3432, C08K 5/3462, C08K 5/5435, C08L 23/26, C08L 83/04, C08K 3/22, C08K 3/32

(54) **FLAME RETARDANT AGENT COMPOSITION, FLAME-RETARDANT RESIN COMPOSITION, AND MOLDED BODY**

(30) Priority: 20.01.2020 JP 2020006603
(71) Applicant: ADEKA CORPORATION, Arakawa-ku Tokyo 116-8554 (JP)
(72) Inventor: NAKAMURA Michio, Saitama-shi, Saitama 336-0022 (JP); BANNO Keisuke, Saitama-shi, Saitama 336-0022 (JP); YONEZAWA Yutaka, Saitama-shi, Saitama 336-0022 (JP)
(74) Representative: Gill Jennings & Every LLP
(86) International application number: PCT/JP2021/001887
(87) International publication number: WO 2021/149732

(57) **Abstract**

This invention provides a flame retardant agent composition capable of imparting excellent flame retardancy to a synthetic resin, a flame-retardant resin composition having excellent flame retardancy as well as water resistance and impact resistance, and a molded body thereof. Provided is a flame retardant agent composition containing the following components (A) and (B): component (A): a phosphate-based flame retardant agent containing at least any one of the following components (A-1) to (A-3): component (A-1): one or more melamine salts selected from the group consisting of melamine orthophosphate, melamine pyrophosphate, and melamine polyphosphate; component (A-2): one or more piperazine salts selected from the group consisting of piperazine orthophosphate, piperazine pyrophosphate, and piperazine polyphosphate; and component (A-3): one or more ammonium salts selected from the group consisting of ammonium orthophosphate, ammonium pyrophosphate, and ammonium polyphosphate; and component (B): one or more acid-modified polyolefins.

## Description

### TECHNICAL FIELD

The present invention relates to a flame retardant agent composition, a flame-retardant resin composition (hereinafter sometimes simply referred to as "resin composition"), and a molded body. Specifically, the present invention relates to a flame retardant agent composition that imparts excellent flame retardancy to a synthetic resin, a flame-retardant resin composition having excellent flame retardancy as well as excellent water resistance and impact resistance, and a molded body thereof.

### BACKGROUND ART

Synthetic resins are widely used in building materials, automobile parts, packaging materials, agricultural materials, housing materials for home appliances, toys, and the like due to their excellent chemical and mechanical properties. However, many synthetic resins are flammable, and depending on the application, flame retardancy is required to reduce the risk of fire. In particular, highly flammable synthetic resins such as polyolefin resins are widely used in a wide range of fields. It is indispensable to blend a flame retardant agent with these resins to impart flame retardancy thereto.

Conventionally used flame retardant agents for synthetic resins are halogen-based flame retardant agents, metal hydroxides, phosphorus-based flame retardant agents, antimony oxide as a flame retardant aid, melamine compounds, and the like. It is widely known to use these agents singly or in combination.

Meanwhile, halogen-based flame retardant agents have problems such as hydrogen halide gas generated during combustion and a large amount of smoke, and metal hydroxides have problems such as an increase in the specific gravity of the blended resin and a decrease in mechanical properties because metal hydroxides need to be added in large amounts. Therefore, attempts have been made to use phosphorus-based flame retardant agents that do not cause these problems. In particular, phosphate-based flame retardant agents composed of ammonium polyphosphate or a salt of polyphosphoric acid and amine are widely used due to their many advantages such as excellent flame retardant performance, low smoke emission, and low toxicity.

On the other hand, since these phosphate-based flame retardant agent are water-soluble, when a resin composition blended with such an agent is exposed to water, the flame retardant agent component elutes, causing a decrease in water resistance such as a decrease in flame retardancy or poor external appearance, which is problematic.

Patent Document 1 discloses, as a means to solve the problem of water resistance, a flame-retardant resin composition containing a phosphate-based flame retardant agent and polycarbodiimide.

### RELATED ART DOCUMENT(S)

### PATENT DOCUMENT(S)

[Patent Document 1] JP5424444B2

### SUMMARY OF THE INVENTION

### PROBLEMS TO BE SOLVED BY THE INVENTION

The invention disclosed in Patent Document 1 has the effect of suppressing the elution amount of the component when a test piece is immersed in warm water. Nevertheless, in recent years, it has been desired to realize a technology capable of exhibiting more excellent water resistance.

An object of the present invention is to provide a flame retardant agent composition capable of imparting excellent flame retardancy to a synthetic resin, a flame-retardant resin composition having excellent flame retardancy as well as water resistance and impact resistance because of containing the flame retardant agent composition, and a molded body thereof.

### MEANS FOR SOLVING THE PROBLEMS

As a result of intensive studies, the present inventors found that the above-described problems can be solved by employing the following constituent features. This has led to the completion of the present invention.

In other words, the present invention provides a flame retardant agent composition, which is characterized by containing the following components (A) and (B):
component (A): a phosphate-based flame retardant agent containing at least any one of the following components (A-1) to (A-3):
   component (A-1): one or more melamine salts selected from the group consisting of melamine orthophosphate, melamine pyrophosphate, and melamine polyphosphate;
   component (A-2): one or more piperazine salts selected from the group consisting of piperazine orthophosphate, piperazine pyrophosphate, and piperazine polyphosphate; and
   component (A-3): one or more ammonium salts selected from the group consisting of ammonium orthophosphate, ammonium pyrophosphate, and ammonium polyphosphate; and
component (B): one or more acid-modified polyolefins.

It is preferable that the flame retardant agent composition of the present invention contains 0.5 to 75 parts by mass of the component (B) with respect to 100 parts by mass of the component (A). In addition, it is preferable that the component (B) is one or more kinds selected from maleic acid-modified polyolefin and maleic anhydride-modified polyolefin in the flame retardant agent composition of the present invention.

Further, it is preferable that an acid value of acid-modified polyolefin serving as the component (B) is from 1 to 100 mgKOH/g in the flame retardant agent composition of the present invention. Furthermore, it is preferable that a mass average molecular weight of acid-modified polyolefin contained as the component (B) is from 1,000 to 500,000 in polystyrene conversion in the flame retardant agent composition of the present invention.

Moreover, it is preferable that the flame retardant agent composition of the present invention further contains at least one selected from the group consisting of silicone oil, an epoxy-based coupling agent, and a lubricant as a component (C) and zinc oxide as a component (D).

The flame-retardant resin composition of the present invention is characterized by containing the above-described the flame retardant agent composition of the present invention in a synthetic resin. It is preferable that the flame-retardant resin composition of the present invention contains 10 to 400 parts by mass of the flame retardant agent composition with respect to 100 parts by mass of the synthetic resin.

It is preferable that the synthetic resin is one or more kinds selected from the group consisting of an olefin-based resin, a styrene-based resin, a vinyl acetate-based resin, and a copolymer thereof in the flame-retardant resin composition of the present invention.

The molded body of the present invention is characterized by being obtained from the above-described flame-retardant resin composition of the present invention.

### EFFECTS OF THE INVENTION

According to the present invention, a flame retardant agent composition that imparts excellent flame retardancy to a synthetic resin can be provided. In addition, according to the present invention, a flame-retardant resin composition having excellent flame retardancy as well as water resistance and impact resistance and a molded body thereof can be provided.

### MODE FOR CARRYING OUT THE INVENTION

The present invention relates to a flame retardant agent composition, a flame-retardant resin composition, and a molded body. Hereinafter, the present invention will be described based on the preferred embodiments thereof.

### <Flame Retardant Agent Composition>

The flame retardant agent composition of the present invention contains the following components (A) and (B):
component (A): a phosphate-based flame retardant agent; and
component (B): one or more acid-modified polyolefins.

### (Component (A))

A phosphate-based flame retardant agent that is the component (A) according to the present invention contains at least any one of the following components (A-1) to (A-3):
component (A-1): one or more melamine salts selected from the group consisting of melamine orthophosphate, melamine pyrophosphate, and melamine polyphosphate;
component (A-2): one or more piperazine salts selected from the group consisting of piperazine orthophosphate, piperazine pyrophosphate, and piperazine polyphosphate; and
component (A-3): one or more ammonium salts selected from the group consisting of ammonium orthophosphate, ammonium pyrophosphate, and ammonium polyphosphate.

A melamine salt used as the component (A-1) in the component (A) according to the present invention is selected from the group consisting of melamine orthophosphate, melamine pyrophosphate, and melamine polyphosphate, and these may be used singly or in the form of a mixture. Of these, from the viewpoints of flame retardancy, handleability, and storage stability, melamine pyrophosphate or melamine polyphosphate is preferable, and melamine pyrophosphate is particularly preferable. When these are used in the form of a mixture, the higher the content proportion of melamine pyrophosphate, the more preferable. Further, the ratio of pyrophosphate to melamine in melamine pyrophosphate is preferably 1:2 in terms of molar ratio.

It is also possible to obtain a salt of a phosphoric acid and melamine by reacting a phosphoric acid or phosphate and melamine which correspond to each other. However, as a melamine salt used in the component (A-1) according to the present invention, melamine pyrophosphate or melamine polyphosphate obtained by heating and condensing melamine orthophosphate is preferable, and melamine pyrophosphate is particularly preferable.

A piperazine salt used as the component (A-2) in the component (A) according to the present invention is selected from the group consisting of piperazine orthophosphate, piperazine pyrophosphate, and piperazine polyphosphate, and these may be used singly or in the form of a mixture. Of these, from the viewpoints of flame retardancy, handleability, and storage stability, piperazine pyrophosphate is preferable, and when used in the form of a mixture, the higher the content proportion of piperazine pyrophosphate, the more preferable. Further, the ratio of pyrophosphate to piperazine in piperazine pyrophosphate is preferably 1:1 in terms of molar ratio.

It is also possible to obtain a salt of a phosphoric acid and piperazine by reacting a phosphoric acid or phosphate and piperazine which correspond to each other. However, as a piperazine salt used in the component (A-2) according to the present invention, piperazine pyrophosphate or piperazine polyphosphate obtained by heating and condensing piperazine diphosphate is preferable, and piperazine pyrophosphate is particularly preferable.

An ammonium salt used as the component (A-3) in the component (A) according to the present invention is selected from the group consisting of ammonium orthophosphate, ammonium pyrophosphate, and ammonium polyphosphate, and these may be used singly or in the form of a mixture. Of these, from the viewpoint of flame retardancy, ammonium polyphosphate is preferable.

Further, the above-described ammonium salt alone is susceptible to hydrolysis. Therefore, a product in which the above-described ammonium salt is coated with a thermosetting resin or microencapsulated or a product in which particles of the above-described ammonium salt are coated with a melamine monomer or a different nitrogen-containing organic compound can also be used suitably. In addition, a product treated with a silicone compound such as a silane coupling agent or silicone oil, a product which is made poorly soluble by adding melamine or the like in the process of producing the above-described ammonium salt, or the like can also be used.

From the viewpoint of flame retardancy, it is particularly preferable for the component (A) according to the present invention to contain the components (A-1) and (A-2). In this case, from the viewpoint of flame retardancy, the content proportion of component (A-1) to component (A-2) is preferably from 20:80 to 50:50 and more preferably from 30:70 to 45:55 in terms of molar ratio of component (A-1) to component (A-2).

### (Component (B))

The component (B) according to the present invention is one or more acid-modified polyolefins.

The acid-modified polyolefin is a polymer in which an acidic group such as maleic anhydride is introduced into a polyolefin.

An acid-modified polyolefin is obtained by a conventionally known method such as a method of reacting a monomer having an acidic group to be grafted to a polyolefin or a method of copolymerizing a monomer having an acidic group with an olefin monomer. Various commercially available products thereof may be used.

The above-described polyolefin is obtained by polymerizing or copolymerizing one or more olefin monomers. Examples of olefin monomers include ethylene, propylene, α-olefin, and diene. Examples of α-olefin include 1-butene, 4-methyl-1-pentene, 1-pentene, 1-octene, 1-decene, and 1-dodecene. Examples of diene include butadiene, isoprene, cyclopentadiene, and 1,11-dodecadiene. In addition to these, other copolymerization components may be contained. Specific examples of polyolefins composed thereof include polyethylene, polypropylene, ethylene-propylene copolymer, ethylene-propylene-diene ternary copolymer, ethylene-1-butene copolymer, ethylene-vinyl acetate copolymer, and mixtures thereof. Among the above, from the viewpoints of water resistance and mechanical properties of the resin composition, a polyolefin in which ethylene, propylene, α-olefin having 4 to 12 carbon atoms, butadiene, or isoprene is polymerized or copolymerized is preferable, a polyolefin in which ethylene, propylene, α-olefin having 4 to 8 carbon atoms, or butadiene is polymerized or copolymerized is more preferable, and a polyolefin in which ethylene, propylene, or butadiene is polymerized or copolymerized is still more preferable.

Examples of the above-described acidic group which is introduced into an acid-modified polyolefin include a carboxylic acid group, a carboxylic acid anhydride group, a sulfonic acid group, and a phosphoric acid group. From the viewpoint of deterioration control in the resin composition, a carboxylic acid group and a carboxylic acid anhydride group are preferable.

Examples of the above-described monomer having an acidic group include a carboxylic acid compound, a carboxylic anhydride compound, a sulfonic acid compound, and a phosphoric acid compound. From the viewpoint of deterioration control in the resin composition, a carboxylic acid compound and a carboxylic anhydride compound are preferable, maleic acid, maleic anhydride, acrylic acid, and methacrylic acid are more preferable, and maleic acid and maleic anhydride are particularly preferable.

As an acid-modified polyolefin that is the component (B) according to the present invention, from the viewpoints of water resistance, mechanical properties, and deterioration control in the resin composition, one or more kinds selected from a carboxylic acid-modified polyolefin and a carboxylic anhydride-modified polyolefin are preferable, one or more kinds selected from a maleic acid-modified polyolefin and a maleic anhydride-modified polyolefin are more preferable, one or more kinds selected from a maleic acid-modified polyethylene, a maleic anhydride-modified polyethylene, a maleic acid-modified polypropylene, and a maleic anhydride-modified polypropylene are still more preferable, and one or more kinds selected from a maleic acid-modified polyethylene and a maleic anhydride-modified polyethylene are particularly preferable.

The acid value of the acid-modified polyolefin is in the range of preferably from 1 to 100 mgKOH/g, more preferably from 2 to 80 mgKOH/g, and most preferably from 5 to 70 mgKOH/g from the viewpoints of water resistance, mechanical properties, and deterioration control in the resin composition. This acid value is a value obtained by measuring according to the following procedures (i) to (iii) in accordance with JIS K0070.

### [Method of Measuring Acid Value of Acid-Modified Polyolefin]

(i) Dissolve 1 g of an acid-modified polyolefin in 70 mL of xylene heated to 140°C.
(ii) At the same temperature, perform titration with a 0.1 mol/L potassium hydroxide ethanol solution (trade name "0.1 mol/L ethanolic potassium hydroxide solution" manufactured by Wako Pure Chemical Industries, Ltd.) using phenolphthalein as an indicator.
(iii) Calculate the acid value (unit: mgKOH/g) by converting the amount of potassium hydroxide required for titration into mg.

In addition, the mass average molecular weight (Mw) of an acid-modified polyolefin is preferably from 1,000 to 500,000, more preferably from 5,000 to 300,000, and still more preferably from 20,000 to 210,000 in polystyrene conversion from the viewpoint of mechanical properties of a resin composition containing the flame retardant agent composition of the present invention. This mass average molecular weight is a value indicated in polystyrene equivalent as measured by size exclusion chromatography in accordance with JIS K7252-1.

The content of the component (B) with respect to 100 parts by mass of the component (A) in the flame retardant agent composition of the present invention is preferably from 0.5 to 75 parts by mass, more preferably from 1 to 65 parts by mass, and still more preferably from 3 to 55 parts by mass. By setting the content of the component (B) with respect to 100 parts by mass of the component (A) within the above-described range, it is possible to obtain sufficient effects of the present invention without adversely affecting mechanical properties and deterioration control in a resin composition containing the flame retardant agent composition of the present invention, which is preferable.

### (Component (C))

It is preferable for the flame retardant agent composition of the present invention to further contain at least one selected from the group consisting of silicone oil, an epoxy-based coupling agent, and a lubricant as the component (C).

By allowing the flame retardant agent composition of the present invention to contain the above-described component (C), it is possible to prevent a powder of the flame retardant agent from aggregating, thereby expecting improved storage stability, improved dispersibility in a synthetic resin, and improved flame retardancy.

Examples of the above-described silicone oil include: dimethyl silicone oil in which the side chains and ends of polysiloxane are all methyl groups; methylphenyl silicone oil in which the side chains and ends of polysiloxane are methyl groups and part of the side chains are phenyl groups; methylhydrogen silicone oil in which the side chains and ends of polysiloxane are methyl groups and part of the side chains are hydrogen; and copolymers thereof. It is also possible to use modified silicone oil which has been amine-modified, epoxy-modified, alicyclic epoxy-modified, carboxyl-modified, carbinol-modified, mercapto-modified, polyether-modified, long chain alkyl-modified, fluoroalkyl-modified, higher fatty acid ester-modified, higher fatty acid amide-modified, silanol-modified, diol-modified, phenol-modified, and/or aralkyl-modified by introducing organic groups into some of these side chains and/or ends.

Specific examples of the above-described silicone oil include: as dimethyl silicone oil, KF-96 (manufactured by Shin-Etsu Chemical Co., Ltd.), KF-965 (manufactured by Shin-Etsu Chemical Co., Ltd.), KF-968 (manufactured by Shin-Etsu Chemical Co., Ltd.), or the like; as methylhydrogen silicone oil, KF-99 (manufactured by Shin-Etsu Chemical Co., Ltd.), KF-9901 (manufactured by Shin-Etsu Chemical Co., Ltd.), HMS-151 (manufactured by Gelest, Inc.), HMS-071 (manufactured by Gelest, Inc.), HMS-301 (manufactured by Gelest, Inc.), DMS-H21 (manufactured by Gelest, Inc.), or the like; as methylphenyl silicone oil, KF-50 (manufactured by Shin-Etsu Chemical Co., Ltd.), KF-53 (manufactured by Shin-Etsu Chemical Co., Ltd.), KF-54 (manufactured by Shin-Etsu Chemical Co., Ltd.), KF-56 (manufactured by Shin-Etsu Chemical Co., Ltd.), or the like; as an epoxy-modified product, X-22-343 (manufactured by Shin-Etsu Chemical Co., Ltd.), X-22-2000 (manufactured by Shin-Etsu Chemical Co., Ltd.), KF-101 (manufactured by Shin-Etsu Chemical Co., Ltd.), KF-102 (manufactured by Shin-Etsu Chemical Co., Ltd.), KF-1001 (manufactured by Shin-Etsu Chemical Co., Ltd.), or the like; as a carboxyl-modified product, X-22-3701E (manufactured by Shin-Etsu Chemical Co., Ltd.); as a carbinol-modified product, X-22-4039(manufactured by Shin-Etsu Chemical Co., Ltd.), X-22-4015(manufactured by Shin-Etsu Chemical Co., Ltd.), or the like; and as an amine-modified product, KF-393 (manufactured by Shin-Etsu Chemical Co., Ltd.) or the like.

For the flame retardant agent composition of the present invention, among the above-described silicone oils, methylhydrogen silicone oil is preferable because it is possible to prevent a powder of the flame retardant agent from aggregating so as to improve storage stability and dispersibility in a synthetic resin.

The above-described epoxy-based coupling agent functions to prevent a powder of the flame retardant agent from aggregating so as to improve storage stability and impart water resistance and heat resistance. Examples of the above-described epoxy-based coupling agent include a compound represented by a general formula of A-(CH₂)ₖ-Si(OR)₃ having an epoxy group. In the formula, A denotes a group having an epoxy group, k denotes an integer of 1 to 3, and R represents a methyl group or an ethyl group. Examples of the group having an epoxy group described herein include a glycidoxy group and a 3,4-epoxycyclohexyl group.

Specific examples of the above-described epoxy-based coupling agent include, as a silane coupling agent having an epoxy group, 2-(3,4-epoxycyclohexyl)ethyl trimethoxysilane, 3-glycidoxypropylmethyl dimethoxysilane, 3-glycidoxypropyl trimethoxysilane, 3-glycidoxypropylmethyl diethoxysilane, 3-glycidoxypropyl triethoxysilane, and glycidoxyoctyl trimethoxysilane.

Examples of the above-described lubricant include: pure hydrocarbon-based lubricants such as liquid paraffin, natural paraffin, microwax, synthetic paraffin, low molecular weight polyethylene, and polyethylene wax; halogenated hydrocarbon-based lubricants; fatty acid-based lubricants such as higher fatty acid and oxy fatty acid; fatty acid amide-based lubricants such as fatty acid amide and bis fatty acid amide; ester-based lubricants such as lower alcohol esters of fatty acid, polyalcohol ester of fatty acid such as glyceride, polyglycol ester of fatty acid, and fatty alcohol ester of fatty acid (ester wax); lubricants such as metallic soap, fatty alcohol, polyalcohol, polyglycol, polyglycol, partial ester of fatty acid and polyalcohol, fatty acid and polyglycol, and partial ester of polyglycerol; silicone oils; and mineral oils. Lubricants can be used singly or two or more thereby can be used in combination.

When the flame retardant agent composition of the present invention is allowed to contain the above-described component (C), from the viewpoint of effectively exerting the effect of the above-described component (C), the content of the component (C) in the flame retardant agent composition of the present invention is preferably from 0.01 to 5 parts by mass and more preferably from 0.01 to 3 parts by mass with respect to 100 parts by mass of the above-described component (A).

In particular, when the flame retardant agent composition of the present invention is allowed to contain silicone oil, the content of silicone oil is preferably from 0.01 to 3 parts by mass and more preferably from 0.1 to 1 part by mass with respect to 100 parts by mass of the above-described component (A) from the viewpoint of enhancing the above-described effects by allowing silicone oil to be contained.

In particular, when the flame retardant agent composition of the present invention is allowed to contain an epoxy-based coupling agent, the content of the epoxy-based coupling agent is preferably from 0.01 to 3 parts by mass and more preferably from 0.1 to 1 part by mass with respect to 100 parts by mass of the above-described component (A) from the viewpoint of enhancing the above-described effects by allowing the epoxy-based coupling agent to be contained.

In particular, when the flame retardant agent composition of the present invention is allowed to contain a lubricant, the content of the lubricant is preferably from 0.01 to 3 parts by mass and more preferably from 0.1 to 0.5 parts by mass with respect to 100 parts by mass of the above-described component (A) from the viewpoint of enhancing the above-described effects by allowing the lubricant to be contained.

### (Component (D))

It is preferable for the flame retardant agent composition of the present invention to further contain zinc oxide as the component (D).

The above-described zinc oxide functions as a flame retardant aid. Zinc oxide may be surface-treated. Commercially available zinc oxide can be used. Examples thereof include zinc oxide I (manufactured by MITSUI MINING & SMELTING CO., LTD.), partially coated zinc oxide (manufactured by MITSUI MINING & SMELTING CO., LTD.), NANOFINE 50 (Ultrafine zinc oxide with an average particle size of 0.02 µm manufactured by Sakai Chemical Industry Co., Ltd.), and NANOFINE K (ultrafine zinc oxide coated with zinc silicate with an average particle size of 0.02 µm manufactured by Sakai Chemical Industry Co., Ltd.).

The content of zinc oxide that is the above-described component (D) in the flame retardant agent composition of the present invention is preferably from 0.01 to 20 parts by mass, more preferably from 0.5 to 10 parts by mass, and still more preferably from 1 to 5 parts by mass with respect to 100 parts by mass of the above-described component (A) from the viewpoint of the improvement of flame retardancy. By setting the content of zinc oxide to 0.01 parts by mass or greater, flame retardancy becomes more favorable. Meanwhile, by setting the content of zinc oxide to 20 parts by mass or less, it is unlikely to adversely affect workability.

### (Other Components)

The flame retardant agent composition of the present invention may arbitrarily contain a known resin additive within a range that does not significantly impair the effect of the present invention. As such resin additives, one or more kinds selected from phenol-based antioxidants, phosphorus-based antioxidants, thioether-based antioxidants, other antioxidants, hindered amine-based light stabilizers, ultraviolet absorbers, plasticizers, crystal nucleating agents, flame retardant agents other than the phosphate-based flame retardant agent according to the present invention, flame retardant aids, anti-drip agents, acrylic processing aids, fillers, hydrotalcites, metallic soaps, antistatic agents, pigments, and dyes can be used. These resin additives may be blended in advance in the flame retardant agent composition of the present invention or may be blended during the preparation of a flame-retardant resin composition described later.

Examples of the above-described phenol-based antioxidants include 2,6-di-*tert*-butyl-p-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-di-*tert*-butyl-4-hydroxybenzyl thioacetate, thiodiethylene bis[(3,5-di-*tert*-butyl-4-hydroxyphenyl)propionate], 4,4'-thiobis(6-tert-butyl-m-cresol), 2-octylthio-4,6-bis(3,5-di-*tert*-butyl-4-hydroxyphenoxy)-s-triazine, 2,2'-methylenebis(4-methyl-6-*tert*-butylphenol), ethylenebis[3,3-bis(4-hydroxy-3-*tert*-butylphenyl)butyrate], 4,4'-butylidene bis(2-tert-butyl-5-methylphenol), 2,2'-ethylidenebis(4,6-di-*tert*-butylphenol), 1,1,3-tris(2-methyl-4-hydroxy-5-*tert*-butylphenyl)butane, bis[2-*tert*-butyl-4-methyl-6-(2-hydroxy-3-*tert*-butyl-5-methylbenzyl)phenyl]terephthalate, 1,3,5-Tris(2,6-dimethyl-3-hydroxy-4-*tert-*butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3,5-di-*tert*-butyl-4-hydroxyphenyl)propionate]methane, 2-*tert*-butyl-4-methyl-6-(2-acryloyloxy-3-*tert*-butyl-5-methylbenzyl)phenol, 3,9-bis[2-{3-(3-tert-butyl-4-hydroxy-5-methylphenyl)propanoyloxy}-1,1-dimethylethyl]-2,4,8,10-tetraoxaspiro[5.5]undecane, and triethyleneglycol bis[β-(3-*tert-*butyl-4-hydroxy-5-methylphenyl)propionate]. These phenol-based antioxidants may be used singly or two or more thereof may be used in combination.

The content of a phenol-based antioxidant in the flame retardant agent composition of the present invention can be within a range that does not impair the effect of the present invention. However, the content is preferably from 0.01 to 1 part by mass and more preferably from 0.03 to 0.8 parts by mass with respect to 100 parts by mass of a synthetic resin contained in a flame-retardant resin composition containing the flame retardant agent composition of the present invention.

Examples of the above-described phosphorus-based antioxidant include triphenyl phosphite, diisooctyl phosphite, heptakis(dipropyleneglycol)triphosphite, triisodecyl phosphite, diphenylisooctyl phosphite, diisooctylphenyl phosphite, diphenyltridecyl phosphite, triisooctyl phosphite, trilauryl phosphite, diphenyl phosphite, tris(dipropyleneglycol )phosphite, diisodecylpentaerythritol diphosphite, dioleylhydrogen phosphite, trilauryl trithiophosphite, bis(tridecyl)phosphite, tris(tridecyl)phosphite, diphenyldecylphosphite, dinonylphenyl bis(nonylphenyl)phosphite, poly(dipropyleneglycol)phenylphosphite, tetraphenyl dipropylglycol diphosphite, tris(nonylphenyl)phosphite, tris(2,4-di-*tert*-butylphenyl)phosphite, tris(2,4-di-tert-butyl-5-methylphenyl)phosphite, tris[2-*tert*-butyl-4-(3-*tert*-butyl-4-hydroxy-5-methylphenylthio)-5-methylphenyl]phosphite, tridecylphosphite, octyl diphenylphosphite, didecyl monophenyl phosphite, distearyl pentaerythritol diphosphite, a mixture of distearyl pentaerythritol diphosphite and calcium stearate salt, bis(tridecyl)pentaerythritol diphosphite, bis(nonylphenyl)pentaerythritol diphosphite, bis(2,4-di-*tert*-butylphenyl)pentaerythritol diphosphite, bis(2,6-di-*tert*-butyl-4-methylphenyl)pentaerythritol diphosphite, bis(2,4,6-tri-*tert*-butylphenyl)pentaerythritol diphosphite, bis(2,4-dicumylphenyl)pentaerythritol diphosphite, tetraphenyltetrakis(tridecyl)pentaerythritol tetraphosphite, bis(2,4-di-*tert*-butyl-6-methylphenyl)ethylphosphite, tetrakis(tridecyl)isopropylidenediphenol diphosphite, tetrakis(tridecyl)-4,4'-n-butylidene bis(2-*tert*-butyl-5-methylphenol)diphosphite, hexakis(tridecyl)-1,1,3-tris(2-methyl-5-*tert*-butylphenyl)butanetriphosphite, tetrakis(2,4-di-tert-butylphenyl)biphenylene diphosphonite, 9,10-dihydro-9-oxa-10-phosphaphenanthrene-10-oxide, (1-methyl-1-propenyl-3-ylidene)tris(1,1-dimethylethyl)-5-methyl-4,1-phenylene)hexakis(tridecyl)phosphite, 2,2'-methylenebis(4,6-di-*tert*-butylphenyl)-2-ethylhexylphosphite, 2,2'-methylenebis(4,6-di-*tert*-butylphenyl)octadecylphosphite, 2,2'-ethylidenebis(4,6-di-*tert*-butylphenyl)fluorophosphite, 4,4'-butylidene bis(2-tert-butyl-5-methylphenyl)tetratridecyl bisphosphite, tris(2-[(2,4,8,10-tetrakis-*tert-*butyldibenzo[d,f][1,3,2]dioxaphosphepine-6-yl)oxy]ethyl)amine, 3,9-bis(4-nonylphenoxy)-2,4,8,10-tetraoxa-3,9-diphosphaspiro[5,5]undecane, 2,4,6-tri-*tert*-butylphenyl-2-butyl-2-ethyl-1,3-propanediol phosphite, 4,4'-isopropylidenediphenol C₁₀ alcohol phosphite, and 4,4'-isopropylidenediphenol C₁₂₋₁₅ alcohol phosphite. These phosphorus-based antioxidants may be used singly or two or more thereof may be used in combination.

The content of a phosphorus-based antioxidant in the flame retardant agent composition of the present invention can be within a range that does not impair the effect of the present invention. However, the content is preferably from 0.01 to 1 part by mass and more preferably from 0.03 to 0.8 parts by mass with respect to 100 parts by mass of a synthetic resin contained in a flame-retardant resin composition containing the flame retardant agent composition of the present invention.

Examples of the above-described thioether-based antioxidant include tetrakis[methylene-3-(laurylthio)propionate]methane, bis(methyl-4-[3-n-alkyl (C12/C14)thiopropionyloxy]5-*tert*-butylphenyl)sulfide, bis(tridecyl)-3,3'-thiodipropionate, dilauryl-3,3'-thiodipropionate, dimyristyl-3,3'-thiodipropionate, distearyl-3,3'-thiojipropionate, lauryl/stearyl thiodipropionate, 4,4'-thiobis(6-*tert*-butyl-m-cresol), 2,2'-thiobis(6-*tert*-butyl-p-cresol), and distearyl-disulfide. These thioether-based antioxidants may be used singly or two or more thereof may be used in combination.

The content of a thioether-based antioxidant in the flame retardant agent composition of the present invention can be within a range that does not impair the effect of the present invention. However, the content is preferably from 0.001 to 10 parts by mass and more preferably from 0.005 to 5 parts by mass with respect to 100 parts by mass of a synthetic resin contained in a flame-retardant resin composition containing the flame retardant agent composition of the present invention.

Examples of the above-described hindered amine-based light stabilizer include 2,2,6,6-tetramethyl-4-piperidylpiperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)·bis(tridecyl)-1,2,3,4-butanetetracarboxylate, bis(1,2,2,6,6-pentamethyl-4-piperidyl)·di(tridecyl)-1,2,3,4-butanetetracarboxylate, bis(1,2,2,4,4-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-*tert*-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8-12-tetraazadodecane, 1,6,11-tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis(2,2,6,6-tetramethyl-1-octyloxy-4-piperidyl)decanedioate, bis(2,2,6,6-tetramethyl-1-undecyloxypiperidine-4-yl)carbonate, and TINUVIN NOR371 manufactured by Ciba Specialty Chemicals Corporation. These hindered amine-based light stabilizers may be used singly or two or more thereof may be used in combination.

The content of such a hindered amine-based light stabilizer can be within a range that does not impair the effect of the present invention. However, the content is preferably from 0.001 to 10 parts by mass and more preferably from 0.005 to 1 part by mass with respect to 100 parts by mass of a synthetic resin contained in a flame-retardant resin composition containing the flame retardant agent composition of the present invention.

Examples of the above-described ultraviolet absorber include: 2-hydroxybenzophenones such as 2,4-dihydroxybenzophenone and 5,5'-methylenebis(2-hydroxy-4-methoxybenzophenone); 2-(2-Hydroxyphenyl)benzotriazoles such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3,5-dicumylphenyl)benzotriazole, 2,2'-methylenebis(4-*tert*-octyl-6-benzotriazolyl phenol), polyethylene glycol ester of 2-(2-hydroxy-3-*tert*-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-*tert-*butylphenyl]benzotriazole, 2-[2-hydroxy-3-(2-methacryloyloxyethyl)-5-*tert-*octylphenyl]benzotriazole, 2-[2-hydroxy-3-(2-methacryloyloxyethyl)-5-*tert*-butylphenyl]-5-chlorobenzotriazole, 2-[2-hydroxy-5-(2-methacryloyloxyethyl)phenyl]benzotriazole, 2-[2-hydroxy-3-*tert*-butyl-5-(2-methacryloyloxyethyl)phenyl]benzotriazole, 2-[2-hydroxy-3-*tert-*amyl-5-(2-methacryloyloxyethyl)phenyl]benzotriazole, 2-[2-hydroxy-3-*tert*-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; Benzoates such as phenyl salicylate, resorcinol monobenzoate, 2,4-di-*tert*-butylphenyl-3,5-di-*tert*-butyl-4-hydroxybenzoate, octyl(3,5-di-tert-butyl-4-hydroxy)benzoate, dodecyl(3,5-di-*tert*-butyl-4-hydroxy)benzoate, tetradecyl(3,5-di-*tert*-butyl-4-hydroxy)benzoate, hexadecyl(3,5-di-*tert*-butyl-4-hydroxy)benzoate, octadecyl(3,5-di-*tert*-butyl-4-hydroxy)benzoate, and behenyl(3,5-di-*tert*-butyl-4-hydroxy)benzoate; Substituted oxanilides such as 2-ethyl-2'-ethoxyoxanilide and 2-ethoxy-4'-dodecyloxanilide; cyano acrylates such as ethyl-α-cyano-β,β-diphenyl acrylate, and methyl-2-cyano-3-methyl-3-(p-methoxyphenyl)acrylate; and various metal salts or metallic chelates, in particular, salts of nickel and chrome, or chelates. These ultraviolet absorbers may be used singly or two or more thereof may be used in combination.

The content of an ultraviolet absorber in the flame retardant agent composition of the present invention can be within a range that does not impair the effect of the present invention. However, the content is preferably from 0.001 to 10 parts by mass and more preferably from 0.005 to 1 part by mass with respect to 100 parts by mass of a synthetic resin contained in a flame-retardant resin composition containing the flame retardant agent composition of the present invention.

Examples of the above-described plasticizer include: phthalic acid-based plasticizers such as dibutyl phthalate, butylbenzyl phthalate, butylhexyl phthalate, diheptyl phthalate, dioctyl phthalate, bis(2-ethylhexyl) phthalate, diisooctyl phthalate, diisononyl phthalate, diisodecyl phthalate, dilauryl phthalate, dicyclohexyl phthalate, dioctyl terephthalate, and bis(2-ethylhexyl)terephthalate; adipic acid-based plasticizers such as dioctyl adipate, bis(2-ethylhexyl)adipate, diisononyl adipate, diisodecyl adipate, and bis(butyldiglycol)adipate; phosphate-based plasticizers such as triphenyl phosphate, tricresyl phosphate, trixylenyl phosphate, tris(isopropylphenyl)phosphate, triethyl phosphate, tributyl phosphate, trioctyl phosphate, tris(butoxyethyl)phosphate, and octyldiphenyl phosphate; polyester-based plasticizers which uses polyalcohols such as ethylene glycol, diethylene glycol, triethylene glycol, 1,2-propanediol, 1,3-propanediol, 2-methyl-1,3-propanediol, 1,3-butanediol, 1,4-butanediol, 1,5-pentanediol, 1,6-hexanediol, neopentyl glycol, and timethylol propane and dibasic acids such as oxalic acid, malonic acid, succinic acid, glutaric acid, adipic acid, pimelic acid, suberic acid, azelaic acid, sebacic acid, phthalic acid, isophthalic acid, terephthalic acid, and cinnamic acid, and optionally monovalent alcohols and monocarboxylic acid (e.g., acetic acid, lauric acid, and aromatic acid) as stoppers; epoxy-based plasticizers such as epoxidized soybean oil, epoxidized flaxseed oil, epoxidized wood oil, epoxidized fish oil, epoxidized beef tallow oil, epoxidized castor oil, epoxidized safflower oil, epoxidized methyl stearate, epoxidized butyl stearate, epoxidized (2-ethylhexyl) stearate, epoxidized stearyl stearate, epoxidized polybutadiene, tris(epoxypropyl)isocyanurate, epoxidized tall oil fatty acid ester, epoxidized flaxseed oil fatty acid ester, bisphenol A diglycidyl ether, vinyl cyclohexene diepoxide, dicyclohexane diepoxide, 3,4-epoxycyclohexylmethyl, and epoxycyclohexane carboxylate; other plasticizers such as tetrahydrophthalic acid-based plasticizers, azelaic acid-based plasticizers, sebacic acid-based plasticizers such as bis(2-ethylhexyl)sebacate and dibutyl sebacate, stearic acid-based plasticizers, citric acid-based plasticizers, trimellitic acid-based plasticizers, pyromellitic acid-based plasticizers, and biphenylene polycarboxylic acid -based plasticizers; and aromatic acid ester-based plasticizers such as trimethylolpropane tribenzoate, diethyleneglycol dibenzoate, dipropyleneglycol dibenzoate, (2-ethylhexyl)benzoate, and isodecylbenzoate. Preferably, polyester-based plasticizers, phthalic acid-based plasticizers, trimellitic acid-based plasticizers, adipic acid-based plasticizers, sebacic acid-based plasticizers, and epoxy-based plasticizers can be mentioned. These plasticizers may be used singly or two or more thereof may be used in combination.

The content of a plasticizer in the flame retardant agent composition of the present invention can be within a range that does not impair the effect of the present invention. However, the content is preferably from 1 to 90 parts by mass and more preferably from 10 to 80 parts by mass with respect to 100 parts by mass of a synthetic resin contained in a flame-retardant resin composition containing the flame retardant agent composition of the present invention.

Examples of the above-described crystal nucleating agent include: carboxylic acid metal salts such as sodium benzoate, 4-*tert*-butylbenzoate aluminum salt, sodium adipate, and disodium bicyclo[2.2.1]heptane-2,3-dicarboxylate; phosphate metal salts such as sodium bis(4-*tert*-butylphenyl)phosphate, sodium-2,2'-methylenebis(4,6-di-tert-butylphenyl)phosphate, lithium-2,2'-methylenebis(4,6-di-*tert*-butylphenyl)phosphate, and aluminum hydroxybis[2,2'-methylenebis(4,6-di-*tert*-butylphenyl)phosphate]; polyalcohol derivatives such as dibenzylidene sorbitol, bis(methylbenzylidene)sorbitol, bis(p-ethylbenzylidene)sorbitol, bis(dimethylbenzylidene)sorbitol, and 1,2,3-trideoxy-4,6:5,7-O-bis(4-propylbenzylidene)nonitol; and amide compounds such as N,N',N"-tris[2-methylcyclohexyl]-1,2,3-propanetricarboxamide (RIKACLEAR PC1), N,N',N"-tricyclohexyl-1,3,5-benzenetricarboxamide, N,N'-dicyclohexyl-naphthalene carboxamide, and 1,3,5-tris(dimethylisopropylamino)benzene. These crystal nucleating agents may be used singly or two or more thereof may be used in combination.

The content of a crystal nucleating agent in the flame retardant agent composition of the present invention can be within a range that does not impair the effect of the present invention. However, the content is preferably from 0.001 to 10 parts by mass and more preferably from 0.01 to 5 parts by mass with respect to 100 parts by mass of a synthetic resin contained in a flame-retardant resin composition containing the flame retardant agent composition of the present invention.

Examples of a flame retardant agent other than the above-described phosphate-based flame retardant agent according to the present invention include: aromatic phosphates such as triphenyl phosphate, tricresyl phosphate, trixylenyl phosphate, cresyl diphenylphosphate, cresyl-2,6-dixylenyl phosphate, resorcinol bis(diphenylphosphate), (1-methylethylidene)-4,1-phenylene tetraphenyl diphosphate, 1,3-phenylene tetrakis(2,6-dimethylphenyl)phosphate, and "ADK STAB FP-500," "ADK STAB FP-600," "ADK STAB FP-800," and "ADK STAB FP-900L"(trade names) manufactured by ADEKA CORPORATION; phosphonates such as divinyl phenylphosphonate, diallyl phenylphosphonate, and (1-butenil)phenylphosphonate; phosphinates such as diphenyl phenyl phosphinate, diphenyl methyl phosphinate, and 9,10-dihydro-9-oxa-10-phosphaphenanthrene-10- oxide derivatives; phosphazene compounds such as bis(2-allylphenoxy)phosphazene and dicresylphosphazene; phosphorus-based flame retardant agents such as red phosphorus; metal hydroxides such as magnesium hydroxide and aluminum hydroxide; bromine-based flame retardant agents such as brominated bisphenol type A epoxy resin, brominated phenol novolac-type epoxy resin, hexabromobenzene, pentabromotoluene, ethylene bis(pentabromophenyl), ethylene bistetra bromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene and 2,4,6-tris(tribromophenoxy)-1,3,5-triazine, tribromophenyl maleimide, tribromophenyl acrylate, tribromophenyl methacrylate, tetrabromobisphenol type A dimethacrylate, pentabromobenzyl acrylate, and brominated styrene. These flame retardant agents may be used singly or two or more thereof may be used in combination.

The content of a flame retardant agent other than the phosphate-based flame retardant agent according to the present invention in the flame retardant agent composition of the present invention can be within a range that does not impair the effect of the present invention. However, the content is preferably from 1 to 90 parts by mass and more preferably from 3 to 80 parts by mass with respect to 100 parts by mass of a synthetic resin contained in a flame-retardant resin composition containing the flame retardant agent composition of the present invention.

Examples of the above-described flame retardant aid include, as inorganic -based flame retardant aids, for example, inorganic compounds such as titanium oxide, aluminum oxide, magnesium oxide, hydrotalcite, talc, and montmorillonite and surface-treated products thereof. Examples thereof include inorganic flame retardant aids such as TIPAQUE R-680 (titanium oxide: manufactured by ISHIHARA SANGYO KAISHA, LTD.), Kyowamag (registered trademark) 150 (magnesium oxide: manufactured by Kyowa Chemical Industry Co., Ltd.), DHT-4A (hydrotalcite: manufactured by Kyowa Chemical Industry Co., Ltd.), and ALCAMIZER (registered trademark) 4 (zinc-modified hydrotalcite: manufactured by Kyowa Chemical Industry Co., Ltd.). Examples of organic flame retardant aids include polyalcohol compounds such as pentaerythritol, dipentaerythritol, tripentaerythritol, polypentaerythritol, neopentyl glycol, trimethylol propane, ditrimethylol propane, 1,3,5-tris(2-hydroxyethyl)isocyanurate (THEIC), polyethylene glycol, Glycerin, diglycerin, mannitol, maltitol, lactitol, sorbitol, erythritol, xylitol, xylose, sucrose, trehalose, inositol, fructose, maltose, and lactose. Of these polyalcohol compounds, one or more kinds selected from the group consisting of condensates of pentaerythritol and pentaerythritol such as pentaerythritol, dipentaerythritol, tripentaerythritol, and polypentaerythritol are preferable, a condensate of dipentaerythritol and pentaerythritol is particularly preferable, and dipentaerythritol is most preferable. In addition, THEIC and sorbitol may also be suitably used. These flame retardant aids may be used singly or two or more thereof may be used in combination.

The content of a flame retardant aid in the flame retardant agent composition of the present invention can be within a range that does not impair the effect of the present invention. However, the content is preferably from 0.01 to 20 parts by mass and more preferably from 0.1 to 10 parts by mass with respect to 100 parts by mass of a synthetic resin contained in a flame-retardant resin composition containing the flame retardant agent composition of the present invention.

Examples of the above-described anti-drip agent include fluorine-based anti-drip agents, silicone rubbers, and layered silicates. Examples of fluorine-based anti-drip agents include: fluorine-based resins such as polytetrafluoroethylene, polyvinylidene fluoride, and polyhexafluoropropylene; perfluoro alkane sulfonate alkali metal salt compounds such as perfluoromethane sodium sulfonate salt, perfluoro-n-potassium butane sulfonate salt, perfluoro-t-potassium butane sulfonate salt, perfluoro sodium octane sulfonate salt, and perfluoro-2-calcium ethyl hexane sulfonate salt; or perfluoro alkane sulfonate alkali earth metal salt. Examples of layered silicates include smectite-based clay minerals such as montmorillonite, saponite, hectorite, bidelite, stevensite, and nontronite, vermiculite, halloysite, swelling mica, and talc, in which organic cations, quaternary ammonium cations, or phosphonium cations may be interlayer-intercalated. These anti-drip agents may be used singly or two or more thereof may be used in combination. Of the anti-drip agents, from the viewpoint of anti-drip performance, a fluorine-based anti-drip agent is particularly preferable, and polytetrafluoroethylene is most preferable.

The content of an anti-drip agent in the flame retardant agent composition of the present invention can be within a range that does not impair the effect of the present invention. However, the content is preferably from 0.005 to 5 parts by mass, more preferably from 0.01 to 5 parts by mass, particularly preferably from 0.05 to 3 parts by mass, and most preferably from 0.1 to 1 part by mass with respect to 100 parts by mass of a synthetic resin contained in a flame-retardant resin composition containing the flame retardant agent composition according to the present invention. When the content of an anti-drip agent is less than 0.005 parts by mass, the anti-drip effect is not sufficient while when it is greater than 5 parts by mass, the resin properties may be reduced.

As the above-described acrylic processing aid, a product in which one kind of (meth)acrylate is polymerized or two or more kinds thereof are copolymerized can be used. Examples of (meth)acrylate to be polymerized or copolymerized include (meth)acrylates such as methyl acrylate, methyl methacrylate, ethyl acrylate, ethyl methacrylate, n-propyl acrylate, isopropyl acrylate, n-propyl methacrylate, isopropyl methacrylate, n-butyl acrylate, isobutyl acrylate, t-butyl methacrylate, n-hexyl acrylate, n-hexyl methacrylate, 2-ethylhexyl acrylate, 2-ethylhexyl methacrylate, dodecyl methacrylate, and tridecyl methacrylate. In addition to the above, (meth)acrylate containing (meth)acrylic acid and a hydroxy group can also be mentioned.

The content of an acrylic processing aid in the flame retardant agent composition of the present invention can be within a range that does not impair the effect of the present invention. However, the content is preferably from 0.01 to 10 parts by mass and more preferably from 0.03 to 1 part by mass with respect to 100 parts by mass of a synthetic resin contained in a flame-retardant resin composition containing the flame retardant agent composition of the present invention.

Examples of the above-described filler can include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, mica, silica, alumina, potassium titanate whisker, wollastonite, and fibrous magnesium oxysulfate, for which the particle size (fiber diameter, fiber length, and aspect ratio in the case of fibrous material) can be appropriately selected and used. In addition, as a filler, a surface-treated filler can be optionally used. These fillers may be used singly or two or more thereof may be used in combination.

The content of a filler in the flame retardant agent composition of the present invention can be within a range that does not impair the effect of the present invention. However, the content is preferably from 0.01 to 90 parts by mass, more preferably from 0.1 to 50 parts by mass, and still more preferably from 5 to 40 parts by mass with respect to 100 parts by mass of a synthetic resin contained in a flame-retardant resin composition containing the flame retardant agent composition of the present invention.

Examples of the above-described hydrotalcites include composite salt compounds consisting of magnesium, aluminum, a hydroxy group, a carbonate group, and arbitrary crystalline water known as natural and synthetic products, in which part of magnesium or aluminum is substituted with a different metal such as an alkali metal or zinc or in which a hydroxyl group and a carbonic acid group are substituted with other anionic groups. In addition, crystalline water may be dehydrated. The hydrotalcites may be coated with a higher fatty acid such as stearic acid, a higher fatty acid metal salt such as an oleic acid alkali metal salt, an organic sulfonic acid metal salt such as a dodecylbenzene sulfonic acid alkali metal salt, higher fatty acid amide, higher fatty acid ester, wax, or the like. These may be natural products or synthetic products, and can be used without being limited to the crystal structure, crystal particles, and the like. These hydrotalcites may be used singly or two or more thereof may be used in combination.

The content of a hydrotalcite in the flame retardant agent composition of the present invention can be within a range that does not impair the effect of the present invention. However, the content is preferably from 0.01 to 90 parts by mass, more preferably from 0.1 to 50 parts by mass, and still more preferably from 5 to 40 parts by mass with respect to 100 parts by mass of a synthetic resin contained in a flame-retardant resin composition containing the flame retardant agent composition of the present invention.

Examples of the above-described metallic soap include salts of metals such as lithium, sodium, magnesium, calcium, aluminum, and zinc and saturated or unsaturated fatty acids such as lauric acid, myristic acid, palmitic acid, stearic acid, behenic acid, oleic acid, and 12-hydroxyoctadecanoic acid. These metallic soaps may be used singly or two or more thereof may be used in combination.

The content of a metallic soap in the flame retardant agent composition of the present invention can be within a range that does not impair the effect of the present invention. However, the content is preferably from 0.001 to 10 parts by mass and more preferably from 0.01 to 5 parts by mass with respect to 100 parts by mass of a synthetic resin contained in a flame-retardant resin composition containing the flame retardant agent composition of the present invention.

Examples of the above-described antistatic agent include: cationic antistatic agents such as a fatty acid quaternary ammonium ion salt and a polyamine quaternary salt; anionic antistatic agents such as a higher alcohol phosphate salt, a higher alcohol EO adduct, polyethylene glycol fatty acid ester, an anionic alkyl sulfonate, a higher alcohol sulfate salt, a higher alcohol ethylene oxide adduct sulfate salt, and a higher alcohol ethylene oxide adduct phosphate salt; nonionic antistatic agents such as polyalcohol fatty acid ester, polyglycol phosphate, and polyoxyethylenealkyl allyl ether; and amphoteric antistatic agents including amphoteric alkyl betaine such as alkyl dimethyl amino acetate betaine and an imidazoline-type amphoteric activator. These antistatic agents may be used singly or two or more thereof may be used in combination.

The content of an antistatic agent in the flame retardant agent composition of the present invention can be within a range that does not impair the effect of the present invention. However, the content is preferably from 0.01 to 20 parts by mass and more preferably from 0.03 to 10 parts by mass with respect to 100 parts by mass of a synthetic resin contained in a flame-retardant resin composition containing the flame retardant agent composition of the present invention.

Commercially available pigments can be used as the above-described pigment. Examples thereof include: Pigment Red 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254;Pigment Orange 13, 31, 34, 36, 38, 43, 46, 48, 49, 51, 52, 55, 59, 60, 61, 62, 64, 65, and 71;Pigment Yellow 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185;Pigment Green 7, 10, and 36;Pigment Blue 15, 15: 1, 15: 2, 15: 3, 15: 4, 15: 5, 15: 6, 22, 24, 56, 60, 61, 62, and 64;and Pigment Violet 1, 19, 23, 27, 29, 30, 32, 37, 40, and 50. These pigments may be used singly or two or more thereof may be used in combination.

The content of a pigment in the flame retardant agent composition of the present invention can be within a range that does not impair the effect of the present invention. However, the content is preferably from 0.001 to 5 parts by mass and more preferably from 0.003 to 3 parts by mass with respect to 100 parts by mass of a synthetic resin contained in a flame-retardant resin composition containing the flame retardant agent composition of the present invention.

Examples of the above-described dye include azo dye, anthraquinone dye, indigoid dye, triaryl methane dye, xanthene dye, alizarin dye, acridine dye, stilbene dye, thiazole dye, naphthol dye, quinoline dye, nitro dye, indamine dye, oxazine dye, phtharocyanine dye, and cyanine dye. These dyes may be used singly or two or more thereof may be used in combination.

The content of a dye in the flame retardant agent composition of the present invention can be within a range that does not impair the effect of the present invention. However, the content is preferably from 0.001 to 5 parts by mass and more preferably from 0.003 to 3 parts by mass with respect to 100 parts by mass of a synthetic resin contained in a flame-retardant resin composition containing the flame retardant agent composition of the present invention.

In addition to the above, the flame retardant agent composition of the present invention can be blended optionally with additives such as, for example, a cross-linking agent, an anti-fog agent, an anti-plate-out agent, a surface treatment agent, a fluorescent agent, a fungicide, a bactericide, a foaming agent, a metal deactivating agent, a mold release agent, and an processing aid except an acrylic processing aid which are usually used for a synthetic resin within a range that does not significantly impair the effect of the present invention. These components may be blended in advance in the flame retardant agent composition of the present invention or may be blended during the preparation of a flame-retardant resin composition described later.

In order to obtain the flame retardant agent composition of the present invention, the components (A) and (B) may be mixed optionally with other arbitrary components, and various mixers can be used for mixing. Heating may be performed during mixing. Examples of mixers that can be used include tumbler mixers, Henschel mixers, ribbon blenders, V-type mixers, W-type mixers, super mixers, and Nauta mixers.

The flame retardant agent composition of the present invention is effective in making a synthetic resin flame-retardant, and is preferably blended with a synthetic resin and used as a flame-retardant resin composition.

### <Flame-Retardant Resin Composition>

The flame-retardant resin composition of the present invention contains at least one synthetic resin and at least one flame retardant agent composition of the present invention.

The content of the flame retardant agent composition in the flame-retardant resin composition of the present invention is preferably from 10 to 400 parts by mass, more preferably from 10 to 300 parts by mass, still more preferably from 10 to 100 parts by mass, and particularly preferably from 20 to 80 parts by mass with respect to 100 parts by mass of the synthetic resin. When the content of the flame retardant agent composition is less than 10 parts by mass with respect to 100 parts by mass of the synthetic resin, sufficient flame retardancy may not be exhibited, while when it is greater than 400 parts by mass, the original physical properties of the resin may be impaired.

Specific examples of the above-described synthetic resin include: olefin-based resins such as polypropylene, high density polyethylene, low density polyethylene, linear low density polyethylene, cross-linked polyethylene, ultra-high molecular weight polyethylene, ethylene-propylene copolymer, ethylene-propylene-diene ternary copolymer, ethylene-vinyl acetate copolymer, ethylene-based ionomer, polyvinyl alcohol, ethylene-vinyl alcohol copolymer, chlorinated polyethylene, and chlorosulfonated polyethylene; halogen-containing resins such as polyvinyl chloride, polyvinylidene chloride, chlorinated polyethylene, chlorinated polypropylene, polyvinylidene difluoride, chloride rubber, vinyl chloride-vinyl acetate copolymer, vinyl chloride-ethylene copolymer, vinyl chloride-vinylidene chloride copolymer, vinyl chloride-vinylidene chloride-vinyl acetate ternary copolymer, vinyl chloride-acrylate copolymer, vinyl chloride-maleate copolymer, and vinyl chloride-cyclohexyl maleimide copolymer; styrene-based resins such as polystyrene, styrene-butadiene copolymer, styrene-butadiene-styrene block copolymer (SBS), styrene-ethylene-butylene-styrene block copolymer (SEBS), acrylonitrile-styrene copolymer (AS), acrylonitrile-butadiene-styrene copolymer (ABS), acrylonitrile-chlorinated polyethylene -styrene copolymer (ACS), and methyl methacrylate-butadiene -styrene copolymer (MBS); acrylic acid-based or methacrylic acid-based resins such as polybutyl acrylate, acrylate-acrylonitrile copolymer, and polymethyl methacrylate; vinyl acetate-based resins such as ethylene-vinyl acetate copolymer and polyvinyl acetate; aromatic ester-based resins such as polyethylene terephthalate, polybutylene terephthalate, polycyclohexane dimethylene terephthalate, polyethylene naphthalate, and polybutylene naphthalate; degradable aliphatic ester-based resins such as polyhydroxybutyrate, polycaprolactone, polybutylene succinate, polyethylene succinate, polylactic acid, polymalic acid, polyglycolic acid, polydioxane, and poly(2-oxetanone); polyamide-based or polyimide-based resins such as polyamide 6, polyamide 66, polyamide 11, polyamide 12, aromatic polyamide, and polyimide; and thermoplastic resins such as polyphenylene oxide, polycarbonate, polycarbonate/ABS resin, branched polycarbonate, polyacetal, polyphenylene sulfide, polyurethane, cellulose-based resin, polysulfone, polyphenylene ether, polyetherketone, polyetheretherketone, polyvinyl formal, polyvinyl butyral, petroleum resin, Kumaron resin, and liquid crystal polymer, and blended products thereof.

In addition, the above-described synthetic resin may be isoprene rubber, butadiene rubber, acrylonitrile-butadiene copolymerized rubber, styrene-butadiene copolymerized rubber, fluorine rubber, silicone rubber, or elastomer such as polyolefin-based thermoplastic elastomer, styrene-based thermoplastic elastomer, polyester-based thermoplastic elastomer, nitrile-based thermoplastic elastomer, nylon-based thermoplastic elastomer, vinyl chloride-based thermoplastic elastomer, polyamide-based thermoplastic elastomer, or polyurethane-based thermoplastic elastomer.

In the present invention, these synthetic resins may be used singly or two or more thereof may be used in combination. In addition, the above-described synthetic resin may be alloyed.

These synthetic resins can be used regardless of the molecular weight, degree of polymerization, density, softening point, proportion of insoluble matter in solvent, degree of stereoregularity, presence or absence of catalyst residue, types and mixing ratios of monomers serving as raw materials, types of polymerization catalysts (e.g., ziegler catalyst and metallocene catalyst), and the like. Of these synthetic resins, from the viewpoint that excellent flame retardancy can be imparted, one or more kinds selected from the group consisting of an olefin-based resin, a styrene-based resin, a vinyl acetate-based resin, and a copolymer thereof is preferable. It is also preferable to use them with a thermoplastic elastomer in combination.

The method for blending the flame retardant agent composition of the present invention into the resin is not particularly limited, and a known method can be adopted. Specific examples of the blending method include a method of mixing with a normal blender, a mixer or the like, a method of melt-kneading with an extruder or the like, a method of solution casting after mixing with a solvent.

### <Molded Body>

The molded body of the present invention can be obtained by molding the flame-retardant resin composition of the present invention and preferably a flame-retardant resin composition using a thermoplastic resin. The molding method and molding conditions are not particularly limited, and known molding methods and molding conditions can be used. Specific molding methods include extrusion processing, calendar processing, injection molding, roll molding, compression molding, blow molding, and rotary molding, and molded bodies having various shapes such as resin plates, sheets, films, bottles, fibers, and deformed products can be produced.

The flame-retardant resin composition of the present invention and a molded body thereof can be used in a wide range of industrial fields involving electricity/electronics/communications, agriculture, forestry and fisheries, mining, construction, food, textile, clothing, medical care, coal, petroleum, rubber, leather, automobiles, precision equipment, wood, building materials, civil engineering, furniture, printing, musical instruments, and the like. More specifically, they are used for office/office automation (OA) equipment such as printers, personal computers, word processors, keyboards, personal digital assistants (PDAs), telephones, copiers, facsimiles, electronic cash registers (ECRs), calculators, electronic organizers, cards, holders, and stationery, home appliances such as washing machines, refrigerators, vacuum cleaners, microwave ovens, lighting equipment, game consoles, irons, and Japanese heater tables (*kotatsu*), AV equipment such as TVs, VTRs, video cameras, radio cassette recorders, tape recorders, minidiscs, CD players, speakers, and LCD displays. electrical and electronic components such as connectors, relays, capacitors, switches, printed circuit boards, coil bobbins, semiconductor sealing material, LED sealing material, electric wire, cables, transformers, deflection yokes, distribution boards, and clocks, housings (frames, bodies, covers, exteriors) and parts of communication equipment/OA equipment, and interior and exterior materials for automobiles.

Further, the flame-retardant resin composition of the present invention and a molded body thereof are used for various use applications for automobile, hybrid car, electric vehicle, vehicle, ship, aircraft, building, housing, and construction materials such as seats (e.g., stuffing and outer materials), belts, ceiling upholstery, compatible tops, armrests, door trims, rear package trays, carpets, mats, sun visors, wheel covers, mattress covers, airbags, insulation materials, straps, strap belts, wire covering materials, electrical insulation materials, paints, coating materials, upholstery materials, flooring materials, corner walls, carpets, wallpaper, wall covering materials, exterior materials, interior materials, roofing materials, deck materials, wall materials, pillar materials, floorboards, fence materials, skeletons and molds, window and door profiles, shingles, boarded walls, terrace, balcony, soundproof boards, heat insulating boards, and window materials, civil engineering materials, and living goods and sporting goods such as clothing, curtains, sheets, plywood, synthetic fiber boards, rugs, entrance mats, sheets, buckets, hoses, containers, glasses, bags, cases, goggles, skis, rackets, tents, and musical instruments.

### EXAMPLES

Hereinafter, the present invention will be specifically shown with reference to Examples and Comparative Examples. The materials, substances, blending amounts, proportions thereof, operations, and the like shown in the following Examples can be appropriately changed as long as they do not deviate from the gist of the present invention. Therefore, the present invention is not limited to the following Examples. In the following Examples, unless otherwise specified, the blending amounts of the components are based on mass.

### <Production of Component (A): Phosphate-based flame retardant agent>

Components (A-1) and (A-2), which are constituents of the component (A), were produced by the methods shown in the following Production Examples. Note that, in Production Examples 1 and 2 below, the purity was determined using the ion chromatography system ICS-2100 (manufactured by Thermo Fisher Scientific), Dionex IonPac AS-19 columns (manufactured by Thermo Fisher Scientific), and an electric conductivity detector.

### [Production Example 1]

### Component (A-1): Melamine salt

Melamine orthophosphate was reacted by heat and condensation at 220°C for 6 hours in a solid phase state, thereby producing a melamine salt containing melamine pyrophosphate as a main component. The melamine salt was used per se without purification. The purity of melamine pyrophosphate in the melamine salt was 98.5%.

### [Production Example 2]

### Component (A-2): Piperazine salt

Piperazine diphosphate was reacted by heat and condensation at 250°C for 1 hour in a solid phase state, thereby producing a piperazine salt containing piperazine pyrophosphate as a main component. The piperazine salt was used per se without purification. The purity of piperazine pyrophosphate in the piperazine salt was 99.0%.

### <Test Piece Preparation Conditions>

The resin compositions blended based on the blending amounts shown in Tables 1 to 7 below were granulated using a twin-screw extruder (TEX25αIII manufactured by The Japan Steel Works, LTD.) under processing conditions of 220°C and 10 kg/hour, thereby obtaining pellets. The obtained pellets were molded using a horizontal injection molding machine (NEX80 manufactured by NISSEI PLASTIC INDUSTRIAL CO., LTD.) under processing conditions of a resin temperature of 220°C and a mold temperature of 40°C, thereby preparing test pieces for flame retardancy evaluation (127 mm × 12.7 mm × 1.6 mm) and test pieces for Charpy impact strength measurement (80 mm × 10 mm × 4 mm). Using these test pieces, UL-94V flame retardancy, water resistance, and Charpy impact strength were evaluated according to the following evaluation methods. The results of each evaluation test are shown in Tables 1 to 7 below.

### <Evaluation Method of Flame Retardancy in UL-94V>

The test pieces (127 mm × 12.7 mm × 1.6 mm) were molded and then immediately allowed to stand still in a constant temperature and humidity chamber at 23°C and a humidity of 50% RH for 7 days. They were ranked according to UL-94V standards for combustion. The combustion rank is highest at V-0, and the flame retardancy decreases as it becomes V-1 and then V-2. Note that those that did not correspond to any of V-0 to V-2 ranks were determined to be no rating (NR).

### <Water Resistance Test Method (1)>

The test pieces (80 mm × 10 mm ×4 mm) were molded and then immediately allowed to stand still in a constant temperature and humidity chamber at 23°C and a humidity of 50% RH for 7 days. The resulting thirteen test pieces were immersed in 240 mL of ultrapure water and allowed to stand still at 70°C for 7 days, and then the test pieces were taken out. The electrical conductivity (µS/cm) of water after immersion was measured using a Hanna EC tester/HI98303N (DiST3). In addition, the numerical value showing the increase/decrease in the electrical conductivity of water after immersion of the test pieces was designated as the effect of suppressing the elution amount of the water-soluble component (described as "Effect of suppressing elution (70°C) in the tables") based on the formulations free of the component (B) (Comparative Examples 1-1, 2-1, and 3-1). When this value is negative, it means that the electric conductivity of water after immersion of the test piece is smaller and the elution amount of the water-soluble component is suppressed as compared with the reference values of the Comparative Examples.

### <Water Resistance Test Method (2)>

The test pieces (127 mm × 12.7 mm × 1.6 mm) were molded and then immediately allowed to stand still in a constant temperature and humidity chamber at 23°C and a humidity of 50% RH for 7 days. Thereafter, the test pieces were dried at 70°C under reduced pressure for 24 hours. The resulting two test pieces were immersed in 93 mL of ultrapure water and allowed to stand still at 85°C for 7 days, and then the test pieces were taken out. The electrical conductivity (µS/cm) of water after immersion was measured using a Hanna EC tester/HI98303N (DiST3). In addition, the numerical value showing the increase/decrease in the electrical conductivity of water after immersion of the test pieces was designated as the effect of suppressing the elution amount of the water-soluble component (described as "Effect of suppressing elution (85°C) in the tables") based on the formulations free of the component (B) (Comparative Examples 3-1, 4-1, and 5-1). When this value is negative, it means that the electric conductivity of water after immersion of the test piece is decreased and the elution amount of the component is suppressed as compared with the reference values of the Comparative Examples.

### <Evaluation Method of Charpy Impact Strength>

The obtained test pieces (80 mm × 10 mm ×4 mm) were molded and then immediately allowed to stand still in a constant temperature and humidity chamber at 23°C and a humidity of 50% RH for 7 days. A notch was made on each test piece. The test pieces were taken out from the constant temperature and humidity chamber, and the Charpy impact strength (kJ/m²) was immediately measured according to JIS K7111.

The details of each component in Tables 1 to 7 are as follows.
ICP: Impact copolymer polypropylene (trade name: Prime Polypro (trademark) J-754HP manufactured by Prime Polymer Co., Ltd.; melt flow rate = 14 g/10 min)
LDPE: Low density polyethylene (trade name: NOVATEC LF441B manufactured by Japan Polyethylene Corporation; melt flow rate = 2.0 g/10 min)
EVA: Ethylene-vinyl acetate copolymer (trade name: Ultrasen 635 manufactured by Tosoh Corporation; melt flow rate = 2.0 g/10 min; vinyl acetate content rate = 25%)
PP: Polypropylene (trade name: NOVATEC FY4 manufactured by Japan Polypropylene Corporation; melt flow rate = 5.0 g/10 min)
SEBS: styrene-ethylene-butylene-styrene block copolymer (trade name: Tuftec (registered trademark) H1062 manufactured by Asahi Kasei Corporation; melt flow rate = 4.5 g/10 min)
Phenol-based antioxidant: Tetrakis[3-(3,5-di-*tert*-butyl-4-hydroxyphenyl)propionyloxymethyl]methane
Phosphorus-based antioxidant: Tris(2,4-di-*tert*-butylphenyl)phosphite
Neutralizer: Calcium stearate
Crystal nucleating agent: Sodium-2,2'-methylenebis(4,6-di-*tert-*butylphenyl)phosphate
Filler: Talc
Melamine salt: Melamine salt produced in Production Example 1
Piperazine salt: Piperazine salt produced in Production Example 2
Ammonium salt: Ammonium polyphosphate (trade name: Exolit AP422 manufactured by Clariant)
Maleic anhydride-modified polyethylene (1): trade name: OREVAC 18302N manufactured by Arkema Inc.; melt flow rate = 1.5 g/10 min; acid value = 9 mgKOH/g; mass average molecular weight (Mw) = 125,000
Maleic anhydride-modified polyethylene (2): trade name: OREVAC OE808 manufactured by Arkema Inc.; melt flow rate = 0.6 g/10 min; mass average molecular weight (Mw) = 208,000
Maleic anhydride-modified polypropylene: trade name: UMEX1010 manufactured by Sanyo Chemical Industries, Ltd.; acid value = 52 mgKOH/g; mass average molecular weight (Mw) = 30,000
Zinc oxide: trade name: zinc oxide I manufactured by MITSUI MINING & SMELTING CO., LTD.
Polycarbodiimide: trade name: CARBODILITE(trademark) LA-1 manufactured by Nisshinbo Chemical Inc.
Silicone oil: trade name: KF-96 manufactured by Shin-Etsu Chemical Co., Ltd.
Epoxy-based coupling agent: 2-(3,4-epoxycyclohexyl)ethyl trimethoxysilane, trade name: Sila-Ace (registered trademark) S530 manufactured by Chisso Corporation
Lubricant: Glycerol monostearate; trade name: RIKEMAL S-100 manufactured by RIKEN VITAMIN Co., Ltd.

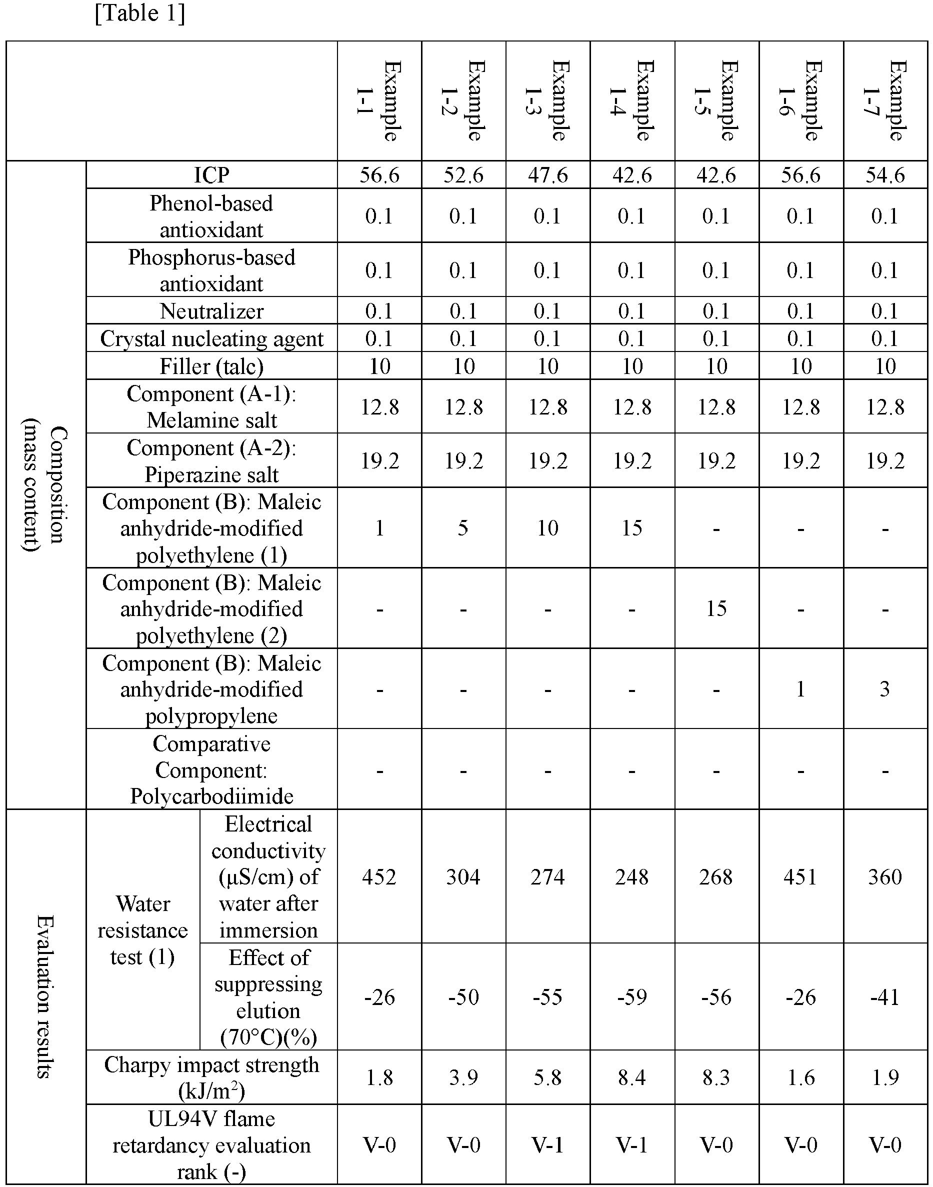

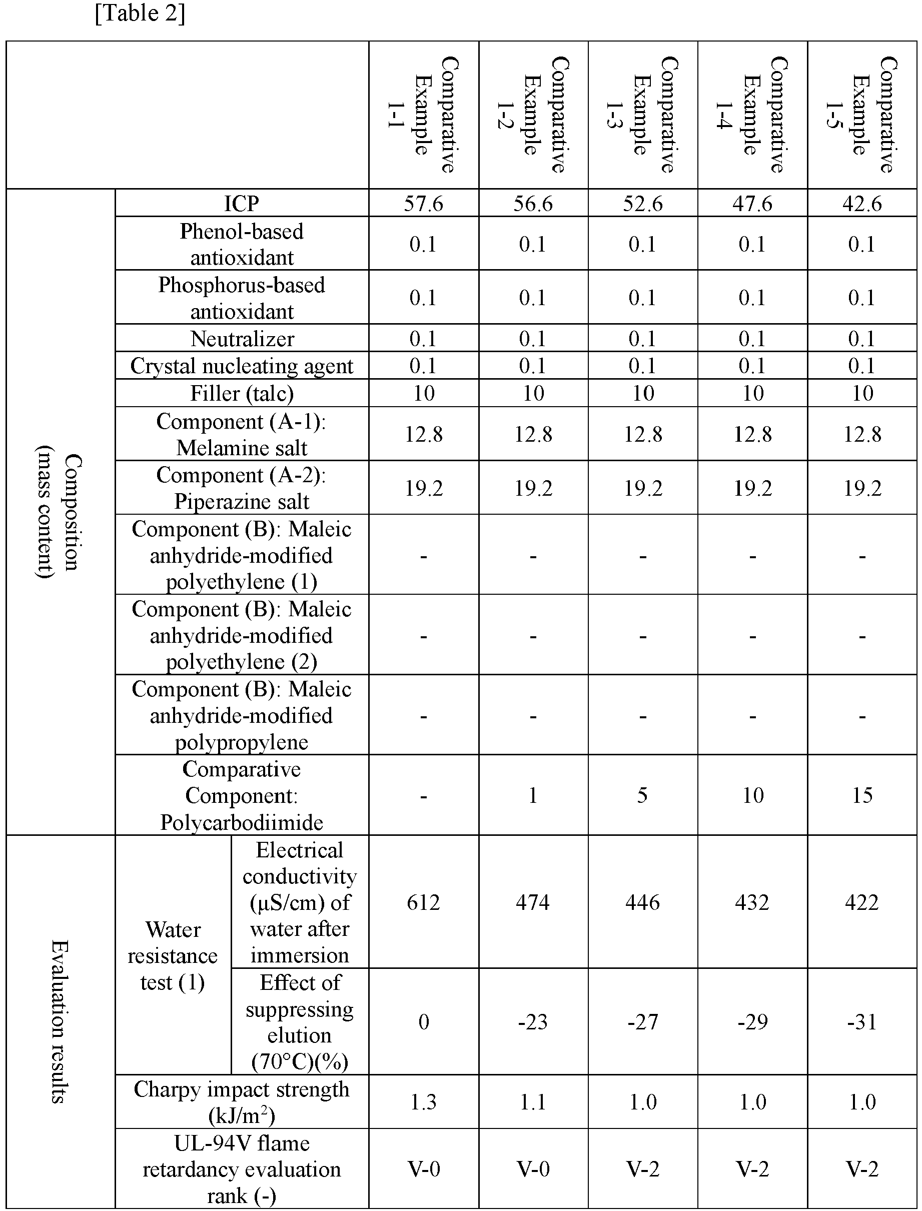

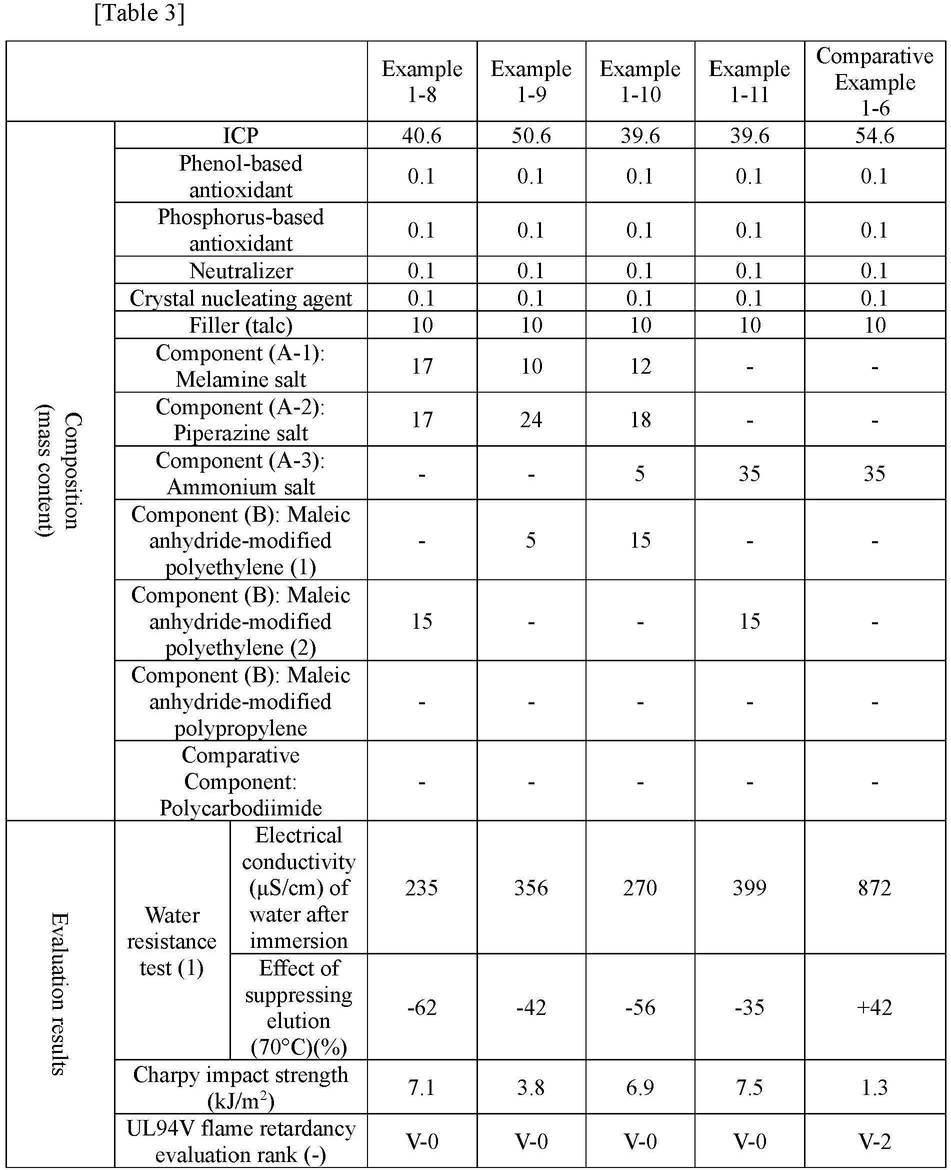

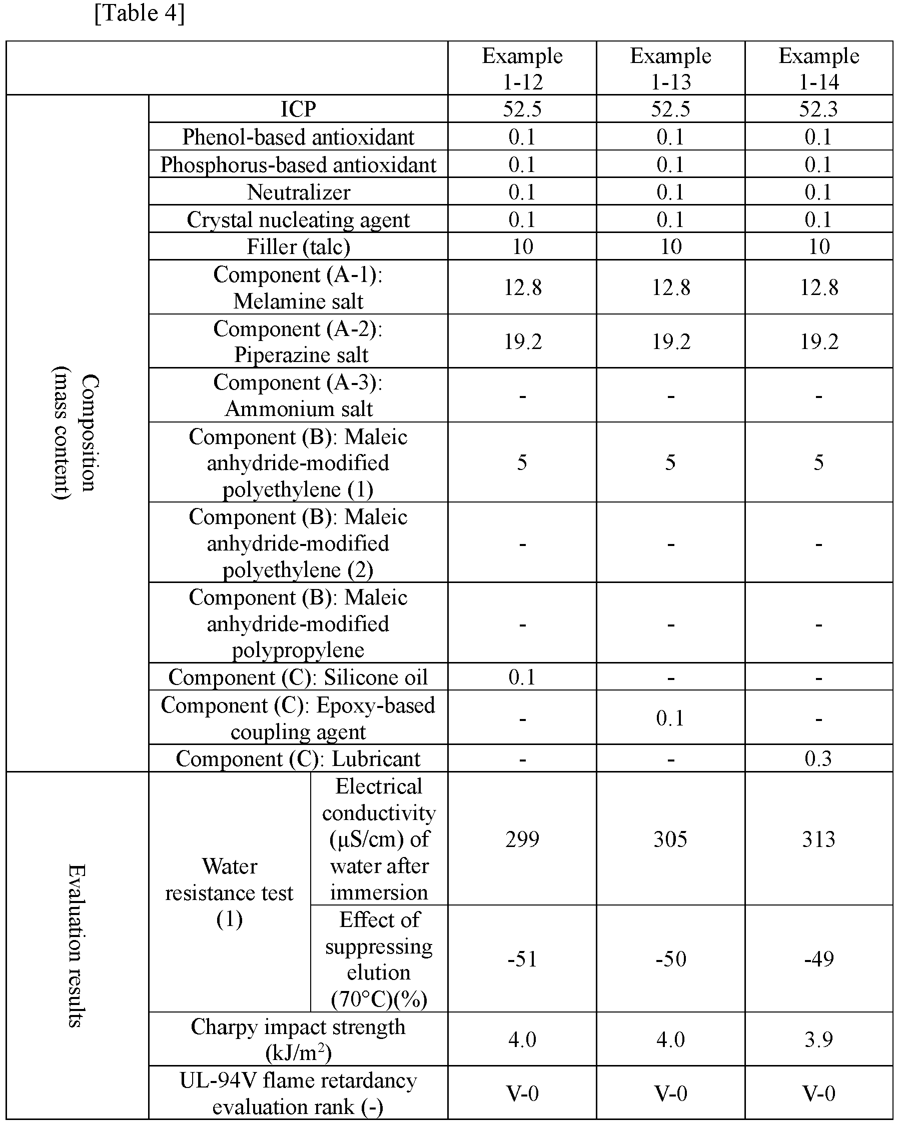

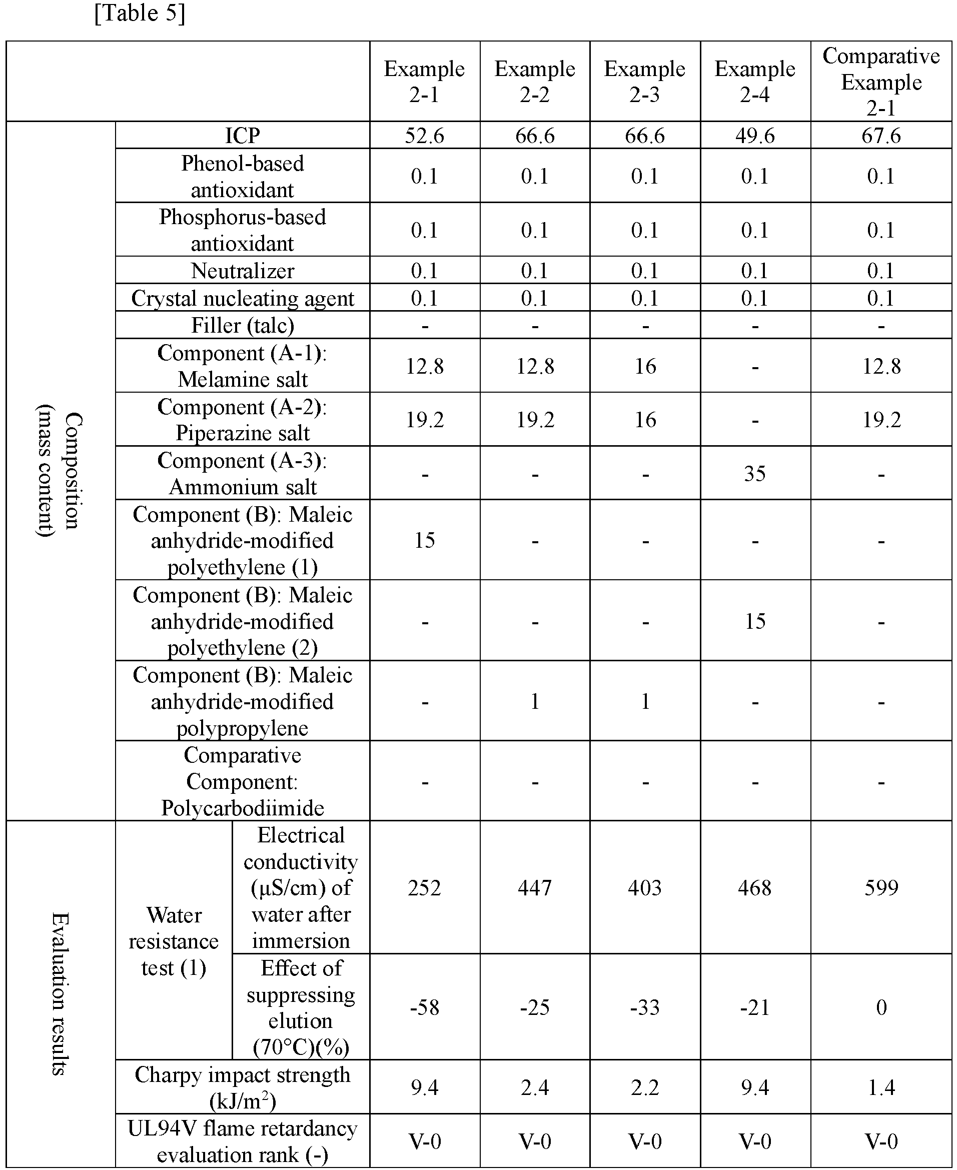

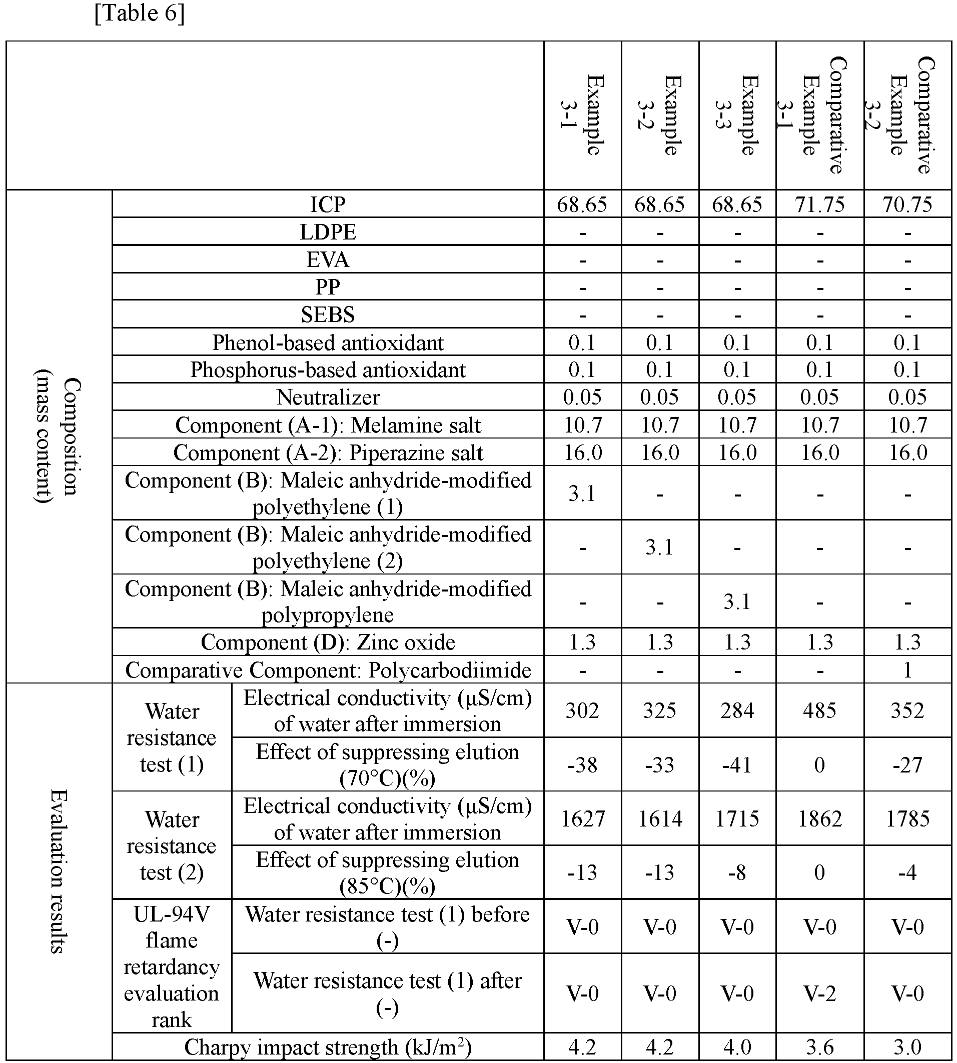

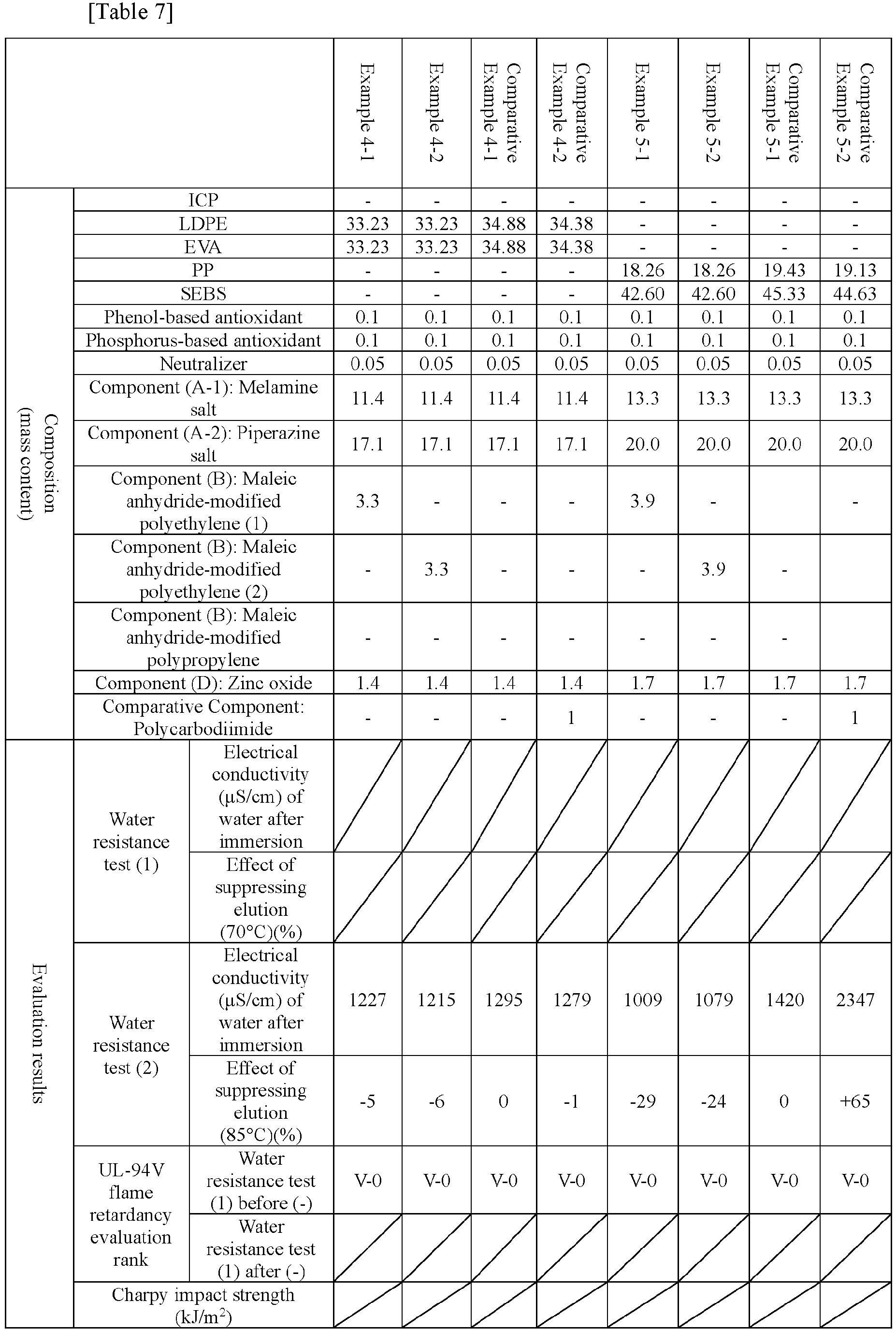

By comparing Examples 1-1 to 1-14 and Comparative Examples 1-1 to 1-6, Examples 2-1 to 2-4 and Comparative Example 2-1, and Examples 3-1 to 3-3 and Comparative Examples 3-1 to 3-2, it was found that a resin composition containing the components (A) and (B) according to the present invention in combination with impact copolymer polypropylene (ICP) has a smaller electric conductivity of immersion water after the water resistance test, is excellent in water resistance, and further has an improved Charpy impact strength as compared with those free of the component (B) and those blended with polycarbodiimide instead of the component (B).

It is understood that in Comparative Examples 1-1 to 1-5, due to the increase in the amount of polycarbodiimide, the UL-94V combustion rank decreases to the V-2 level, and the flame retardant performance is reduced. Meanwhile, it is understood that in Examples 1-1 to 1-5, even when the amount of the component (B) according to the present invention is increased to 15 parts by mass, the UL-94V combustion rank is maintained at V-1 or higher.

In Comparative Examples 3-1, the UL-94V combustion rank after the water resistance test decreased to V-2, but in Examples 3-1 to 3-3, the UL-94V combustion rank after the water resistance test did not decrease.

The comparison of Examples 4-1 to 4-2 and Comparative Examples 4-1 to 4-2 and the comparison of Examples 5-1 to 5-2 and Comparative Examples 5-1 to 5-2 showed results that also when the base resin was LDPE/EVA or PP/SEBS, the resin composition according to the present invention in which the components (A) and (B) were used in combination was excellent in water resistance without the decrease in flame retardancy.

## Claims

1. A flame retardant agent composition comprising the following components (A) and (B):
component (A): a phosphate-based flame retardant agent containing at least any one of the following components (A-1) to (A-3):
component (A-1): one or more melamine salts selected from the group consisting of melamine orthophosphate, melamine pyrophosphate, and melamine polyphosphate;
component (A-2): one or more piperazine salts selected from the group consisting of piperazine orthophosphate, piperazine pyrophosphate, and piperazine polyphosphate; and
component (A-3): one or more ammonium salts selected from the group consisting of ammonium orthophosphate, ammonium pyrophosphate, and ammonium polyphosphate; and
component (B): one or more acid-modified polyolefins.

2. The flame retardant agent composition according to claim 1, comprising from 0.5 to 75 parts by mass of the component (B) with respect to 100 parts by mass of the component (A).

3. The flame retardant agent composition according to claim 1, wherein the component (B) is one or more kinds selected from maleic acid-modified polyolefin and maleic anhydride-modified polyolefin.

4. The flame retardant agent composition according to claim 1, wherein an acid value of acid-modified polyolefin serving as the component (B) is from 1 to 100 mgKOH/g.

5. The flame retardant agent composition according to claim 1, wherein a mass average molecular weight of acid-modified polyolefin contained as the component (B) is from 1,000 to 500,000 in polystyrene conversion.

6. The flame retardant agent composition according to claim 1, further comprising at least one selected from the group consisting of silicone oil, an epoxy-based coupling agent, and a lubricant as a component (C).

7. The flame retardant agent composition according to claim 1, further comprising zinc oxide as a component (D).

8. A flame-retardant resin composition comprising the flame retardant agent composition according to claim 1 in a synthetic resin.

9. The flame-retardant resin composition according to claim 8, comprising from 10 to 400 parts by mass of the flame retardant agent composition with respect to 100 parts by mass of the synthetic resin.

10. The flame-retardant resin composition according to claim 8, wherein the synthetic resin is one or more kinds selected from the group consisting of an olefin-based resin, a styrene-based resin, a vinyl acetate-based resin, and a copolymer thereof.

11. A molded body comprising the flame-retardant resin composition according to claim 8.
